# EUROPÄISCHE PATENTSCHRIFT

(11) **EP 0 475 021 B1**
(45) Veröffentlichungstag und Bekanntmachung des Hinweises auf die Patenterteilung: **23.03.1994**
(21) Anmeldenummer: 91112000.4
(22) Anmeldetag: 18.07.1991
(51) Int. Cl.: A01D 34/64

(54) **Mäher, insbesondere Frontmäher**
Mower, especially front-mounted mower
Tondeuse, en particulier tondeuse frontale

(30) Priorität: 26.07.1990 US 558045
(43) Veröffentlichungstag der Anmeldung: 18.03.1992
(73) Patentinhaber: DEERE & COMPANY, Moline, Illinois 61265 (US)
(72) Erfinder: Braun, Stephen Alphonse, Horicon, Wisconsin 53032 (US); O'Neill, Michael Jerome, Mayville, Wisconsin 53050 (US); Cutshall, Donald Lynn, Burnsville, Minnesota (US)
(74) Vertreter: Feldmann, Bernhard

(56) Entgegenhaltungen:
- US-A- 3 154 903
- US-A- 3 782 084
- US-A- 3 839 919
- US-A- 4 320 616
- US-A- 4 416 109
- US-A- 4 441 306
- US-A- 4 869 057

## Beschreibung

Die Erfindung bezieht sich auf einen Mäher, insbesondere Frontmäher, mit einem sich auf mindestens einem antreibbaren Rad abstützenden Grundgerät, einem an das Grundgerät vertikal unverschwenkbar anschließbaren, sich auf mindestens einem Laufrad abstützenden Rahmen und einem an den Rahmen über eine Höhenverstellvorrichtung anschließbaren Mähergehäuse.

In der Regel sind Mäher, insbesondere für einen Großflächeneinsatz, an Kompakttraktoren höhenverstellbar angeschlossen. Solche Kompakttraktoren zeichnen sich durch ihre Wendigkeit und einen hohen Komfort für die Bedienungsperson aus. Sie haben einen niedrigen Schwerpunkt und damit eine hohe Hangstabilität. Für den Einsatz an Böschungen, insbesondere Autobahnböschungen oder dergleichen werden jedoch aus Sicherheitsgründen Mäher bevorzugt, die von einer hinter dem Mäher hergehenden Bedienungsperson an Holmen geführt werden.

Sie sind selbstfahrend ausgebildet, und bei dem Mäher, von dem die Erfindung ausgeht (US-A-4 704 848), ist das Grundgerät mit einer Antriebsvorrichtung, wie einem Verbrennungsmotor, ausgerüstet. Das Grundgerät schiebt den Rahmen, an dem das Mähergehäuse aufgehängt ist, normalerweise vor sich her. Die Laufräder des Rahmens können als Pendelräder ausgebildet sein, und der Mäher wird durch Abbremsen eines seiner Treibräder am Grundgerät gesteuert. Die Höhenverstellbarkeit des Mähergehäuses kann auf vielerlei Arten erfolgen, vielfach durch Verstellen der Pendelräder, wodurch das Mähergehäuse jedoch eine Schieflage erhält. Bei dem gattungsmäßig berücksichtigten Mäher ist das Mähergehäuse parallel über vertikale Hubspindeln verstellbar, von denen eine über eine Handkurbel betätigbar ist, wobei deren Drehung über einen Kettentrieb auf die übrigen Hubspindeln übertragen wird. Die Hubspindeln sind in dem Rahmen drehbar und erstrecken sich von dessen Oberseite noch nach oben, um eine ausreichende Höhenverstellung zu gewährleisten. Sie sind durch ein Gehäuse abgedeckt und nur eine ist durch die Oberseite des Gehäuses hindurchgeführt, um noch die Handkurbel aufnehmen zu können. Hierdurch ergibt sich eine relativ hohe Bauweise, die ein Arbeiten mit dem Mäher unter Büschen oder anderen Hindernissen zumindest erschwert, wenn nicht unmöglich macht.

Die mit der Erfindung zu lösende Aufgabe wird darin gesehen, solche Mäher kompakt und niedrig auszubilden, damit eine Kippgefahr vermieden und ein Arbeiten unter tiefliegenden Hindernissen möglich ist. Diese Aufgabe ist nach der Erfindung dadurch gelöst worden, daß ein einen ersten Teil und einen zweiten Teil aufweisendes Verbindungsglied mit seinem ersten Teil mit einem ersten Bereich des Mähergehäuses vertikal schwenkbar verbunden, mit seinem zweiten Teil an dem Rahmen höhenverschiebbar angelenkt ist und eine einen Winkelhebel aufweisende Stellvorrichtung schwenkbar aufnimmt, die einenends an einem zweiten Bereich des Mähergehäuses und anderenends an der Höhenverstellvorrichtung angreift, über die der erste Bereich des Mähergehäuses vertikal verstellbar ist. Auf diese Weise kann der Rahmen relativ niedrig über dem Boden verlaufen und der Mäher kann mit seinem Mähergehäuse leicht unter Büsche oder andere tiefgelegene Hindernisse gefahren werden, da die Höhenverstellung insbesondere des zweiten Bereiches des Mähergehäuses einmal durch ein Verschwenken des Winkelhebels und zum anderen durch ein sich Höherverschieben der Stellvorrichtung erfolgt. Dieser Bewegungsablauf an sich ist bereits von einem an einem Kompaktschlepper angebauten Frontmäher (John Deere Frontmäher F510 und F525) bekannt. Die Kinematik ist jedoch anders ausgebildet, da bei an einen Kompaktschlepper angebauten geschobenem Frontmäher der Anschluß über Schubarme erfolgt, die an dem Kompaktschlepper vertikal schwenkbar angeschlossen sind. Der Frontmäher ist dadurch gegenüber dem Kompaktschlepper höhenverschwenkbar und eine Übertragung dieses bekannten Gestänges auf einen Frontmäher nach der Erfindung würde ein Einknicken des Rahmens gegenüber dem Grundgerät bedeuten.

Hierzu kann nach einem weiteren Vorschlag der Erfindung der Winkelhebel der Stellvorrichtung mit dem Verbindungsglied vertikal schwenkbar verbunden und zusammen mit dem Verbindungsglied höhenverschiebbar sein, wobei der eine Schenkel des Winkelhebels über ein erstes Gestänge an der Höhenverstellvorrichtung und der andere Schenkel über ein zweites Gestänge an den zweiten Bereich des Mähergehäuses angreift.

Um ein einfaches Höhenverschieben zu erreichen, kann erfindungsgemäß ferner noch vorgesehen werden, daß in dem zweiten Teil des Verbindungsgliedes ein Längsschlitz vorgesehen ist, durch den eine mit dem Rahmen verbundene Stange geführt ist.

Zweckmäßig kann die Höhenverstellvorrichtung eine von den Frontmähern F510 und F525 bekannte und auf dem Mähergehäuse drehbar angeordnete Stange aufweisen, die endseitig mit ersten schwenkbar an dem Rahmen angreifenden Lenkern fest verbunden ist, den ersten Teil des Verbindungsgliedes drehbar aufnimmt und mit einem Ausleger versehen ist, an dem eine manuell betätigbare Verstelleinrichtung und das erste Gestänge angreift.

Die Verstelleinrichtung kann eine über eine Handkurbel verstellbare sich auf dem Mähergehäuse abstützende Gewindestange aufweisen, wobei parallel zu den ersten Lenkern und oberhalb dieser zweite Lenker vorgesehen sind, die schwenkbar mit dem Rahmen und mit dem Mähergehäuse verbunden sind.

Vorteilhaft sind die den Rahmen abstützenden Laufräder als mit dem Rahmen schwenkbar verbundene Pendelräder ausgebildet, an denen die ersten und zweiten Lenker angelenkt sind.

Vorteilhaft kann das zweite Gestänge eine Totgangverbindung aufweisen und der zweite Bereich des Mähergehäuses mit mindestens einem Bodenrad versehen sein, so daß beim Auftreffen des zweiten Bereiches des Mähergehäuses auf ein Bodenhindernis ein Schwenken um die Verbindungsstelle der Pendelräder mit dem Rahmen erfolgen kann.

In der Zeichnung ist ein nachfolgend näher erläutertes Ausführungsbeispiel der Erfindung dargestellt. Es zeigt:
- Fig. 1: einen an Holmen geführten, ein Grundgerät und einen Rahmen mit einem Mähergehäuse aufweisenden Frontmäher in Seitenansicht,

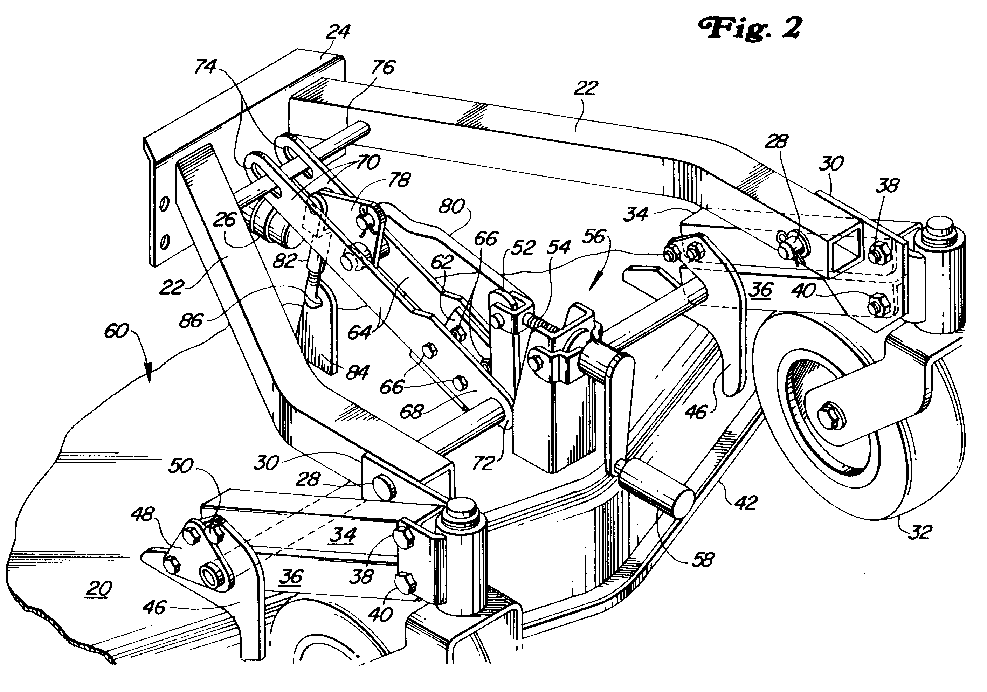

- Fig. 2: den Rahmen mit angebautem Mähergehäuse in perspektivischer Darstellung,

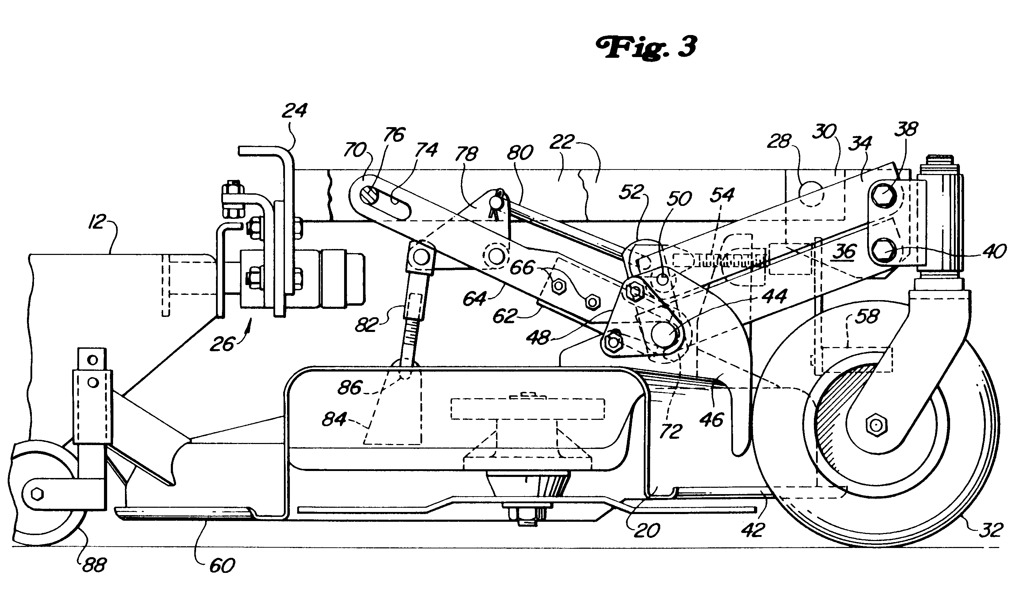

- Fig. 3: das Mähergehäuse in einer abgesenkten Stellung,

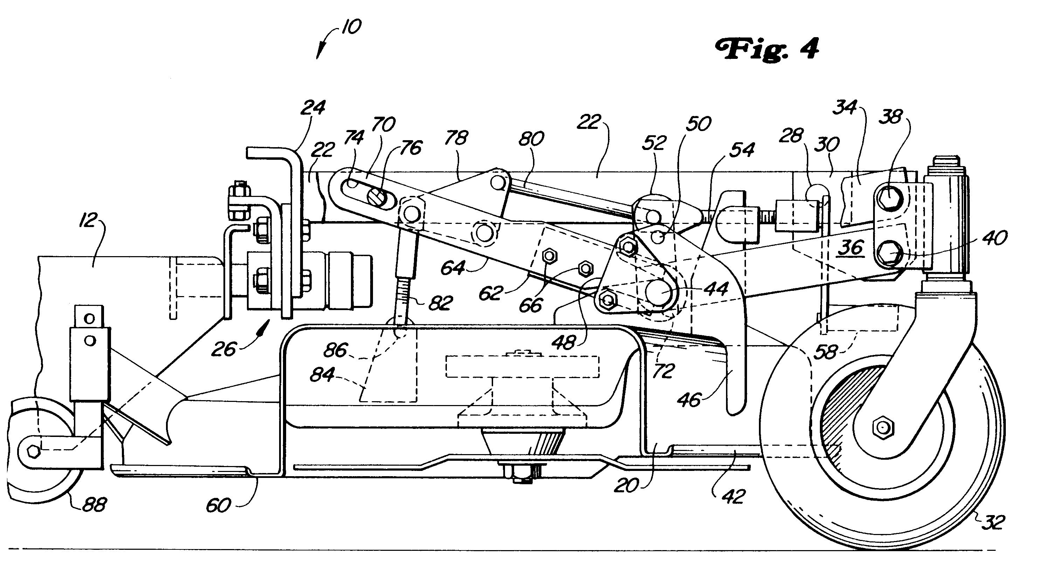

- Fig. 4: das Mähergehäuse in einer angehobenen Stellung und

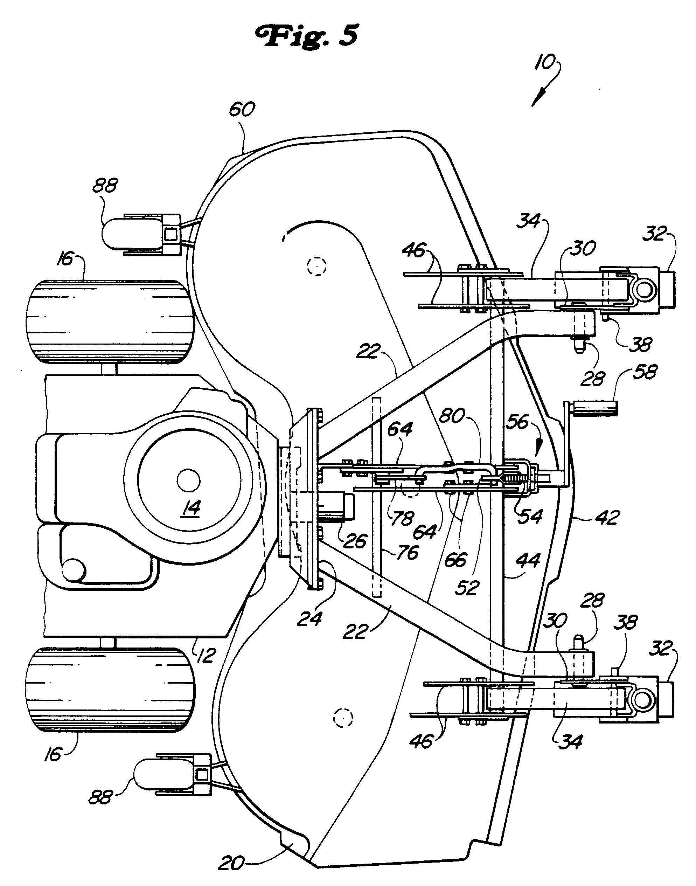

- Fig. 5: den Rahmen mit Mähergehäuse in der Draufsicht.

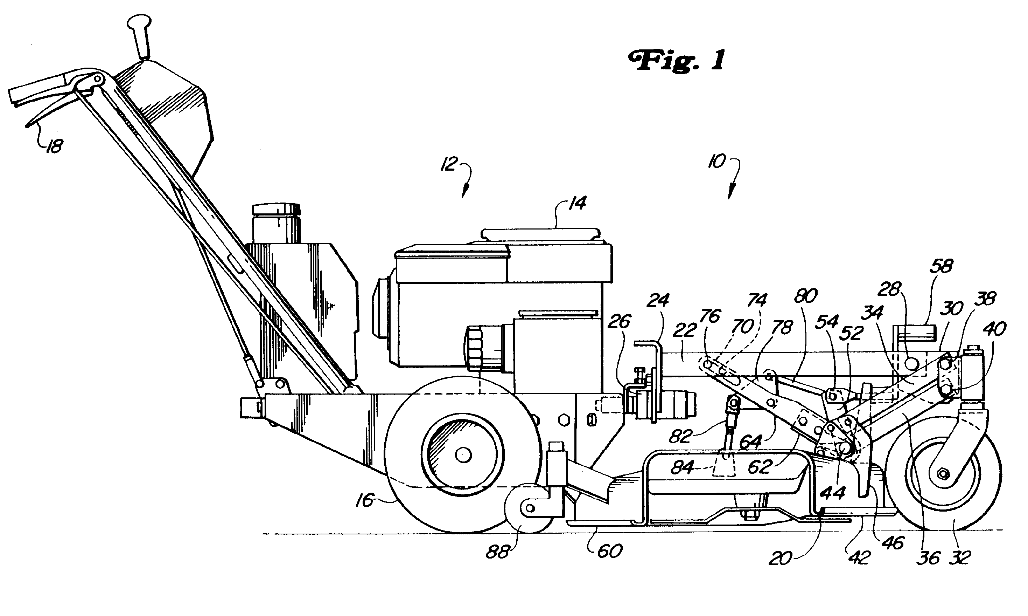

In Fig. 1 der Zeichnung ist ein an rückwärtigen Holmen von Hand geführter Mäher 10 dargestellt, der ein Grundgerät 12 mit einer Antriebsvorrichtung, wie einen Verbrennungsmotor 14, und Treibräder 16 aufweist. Der Mäher wird von einer hinter dem Mäher hergehenden Bedienungsperson geführt und ist über Bedienungshebel 18 in seiner Fahrgeschwindigkeit einstellbar und auch lenkbar dadurch, daß eines der Treibräder 16 abgebremst wird.

An der Frontseite ist ein Mähergehäuse 20 mit Schneideinrichtungen, wie mehrere nebeneinander angeordnete Sichelmesser, vorgesehen. Das Mähergehäuse 20 wird damit vor dem Grundgerät 12 hergeschoben und ist an einem Schubarme aufweisenden Rahmen 22 höhenverstellbar aufgehängt. Der Rahmen 22 erstreckt sich von einer Platte 24 aus gesehen nach vorne und ist über einen Gelenkmechanismus 26 derart angeschlossen, daß eine Schwenkbewegung um eine in Fahrtrichtung verlaufende Achse aber nicht um eine quer zur Fahrtrichtung verlaufende Achse möglich ist. Der Rahmen ist damit gegenüber dem Grundgerät 12 nicht höhenverschwenkbar angeordnet, wohl aber seitenverschwenkbar um die in Fahrtrichtung verlaufende Achse. Frontseitig weist der Rahmen 22 an den beiden vorderen Enden der Schubarme je einen nach außen gerichteten Zapfen 28 zur Aufnahme von Frontplatten 30 auf, die mit Laufrädern 32 in Form von Pendelrädern fest verbunden sind. Die Laufräder 32 stützen damit zusammen mit den Frontplatten 30 den vorderen Bereich des Rahmens 22 auf dem Boden ab.

Nachfolgend wird auf die Aufhängung des Mähergehäuses 20 an dem Rahmen 22 eingegangen. Hierzu dienen jeweils zwei erste untere Lenker 36 und zwei obere Lenker 34, die zueinander parallel verlaufen und einenends an den Frontplatten 30 über Zapfen 40 und 38 angelenkt sind und sich von diesen aus gesehen nach rückwärts erstrecken. Hierbei sind die unteren Lenker 36 mit ihren rückwärtigen Enden mit einer Stange 44 verschweißt oder anderweitig fest verbunden, wobei sich die Stange 44 quer über das Mähergehäuse erstreckt und endseitig in Hakenlaschen 46 drehbar aufgenommen ist, die mit einem vorderen oder ersten Bereich des Mähergehäuses 20 fest verbunden sind. Dreieckförmig ausgebildete Platten 48, die an die Hakenlaschen 46 angeschlossen sind, nehmen die Stange 44 drehbar auf und bewirken, daß die Stange 44 drehbar in den Hakenlaschen 46 gesichert ist. Die oberen Lenker 34 sind über Zapfen 50 an die Hakentaschen 46 angelenkt. Ein hochstehender Ausleger 52 ist etwa mittig mit seinem einen Ende an die Stange 44 starr angeschlossen und an seinem anderen Ende mit einer Gewindestange 54 gekuppelt. Der Ausleger 52 ist über die Gewindestange 54 in Fahrtrichtung verstellbar und verdreht dabei die Stange 44, wenn eine Kurbelvorrichtung 56 betätigt wird, die am vorderen Bereich des Mähergehäuses 20 vorgesehen ist. Die Kurbelvorrichtung 56 weist eine Handkurbel 58 auf, bei deren Betätigung der erste Bereich des Mähergehäuses 20 auf- oder abgeschwenkt wird. Beim Drehen der Handkurbel 58 wird die Gewindestange 54 in Fahrtrichtung verstellt, wobei der Ausleger 52 mit der Stange 44 um deren Längsachse verstellt wird. Die mit der Stange 44 fest verbundenen unteren Lenker 36 verschwenken dann dabei um ihre Zapfen 40 an der Frontplatte 30 und die Höhe des ersten Bereiches 42 des Mähergehäuses 20 wird eingestellt.

Ein zweiter oder rückwärtiger Bereich 60 des Mähergehäuses 20 ist mit der Handkurbel 58 in Wirkverbindung derart, daß der rückwärtige Bereich des Mähergehäuses 20 beim Drehen der Handkurbel 58 parallel mit dem vorderen Bereich des Mähergehäuses 20 mitverstellt wird. Ein U-förmig ausgebildeter Teil 62 liegt gegen die Stange 44 an und ist mit zwei Verbindungsteilen 64 verbunden, die zueinander einen Querabstand aufweisen. Schrauben 66 verbinden die Verbindungsteile 64 mit dem U-förmigen Teil 62. Die Verbindungsteile 64 haben einen ersten oder vorderen Teil und einen rückwärtigen oder zweiten Teil 70. Hierbei ist der erste Teil 68 als Haken 72 ausgebildet, der die Stange 44 umgreift. Über die Haken 72 und den U-förmigen Teil sind daher die Verbindungsteile 64 mit der Stange 44 derart verbunden, daß die Stange 44 in somit gebildeten Lagerstellen drehen kann, ohne daß sich bei deren Drehung die Verbindungsteile 64 mitdrehen. Der zweite Teil 70 der Verbindungsteile 64 ist als Totgangverbindung ausgebildet oder mit Längsschlitzen 74 versehen, durch die eine Stange 76 geführt ist, die sich zwischen den beiden Schubarmen des Rahmens 22 erstreckt.

Die Stange 76 trägt damit den rückwärtigen Teil 70 der Verbindungsteile 64. Ein Winkelhebel 78 ist an den Verbindungsteilen 64 zwischen den Längsschlitzen 74 und der Stange 44 schwenkbar angeschlossen und nimmt an seinem einen Schenkel ein erstes Gestänge 80 auf, das sich nach vorne erstreckt und dort mit dem Ausleger 52 und der Gewindestange 54 gelenkig verbunden ist. An dem anderen Schenkel des Winkelhebels 78 ist ein zweiter Verbindungsteil 82 angeschlossen, der sich nach unten erstreckt, um an den zweiten Bereich 60 des Mähergehäuses 20 angekuppelt zu werden. Zu seiner Aufnahme dient ein mit dem rückwärtigen Bereich 60 des Mähergehäuses fest verbundener hochstehender Teil 84 mit einer Öffnung 86. In dieser Öffnung kann sich der Verbindungsteil 82 verstellen. Anstelle der Öffnung 86 kann auch ein Langloch in dem hochstehenden Teil 84 vorgesehen sein, das den Verbindungsteil 82 verschiebbar und verdrehbar aufnimmt.

Zum Einstellen der Höhe des Mähergehäuses 20 dreht die Bedienungsperson die Handkurbel 58 nach rechts oder links, jenachdem, ob das Mähergehäuse angehoben oder abgesenkt werden soll. Beim Drehen der Handkurbel 58 wird der Ausleger 52 nach vorne oder rückwärts verschwenkt, wobei sich die Stange 44 um ihre Längsachse dreht. Bei der Drehbewegung der Stange 44 werden auch die unteren Lenker 36, die mit der Stange 44 fest verbunden sind, mitverstellt. Da aber die vorderen Enden der unteren Lenker 36 an den Frontplatten 30 angelenkt sind, bewirkt die Drehung der Stange ein Anheben oder Absenken der rückwärtigen Enden der unteren Lenker 36 um deren Anlenkstelle an die Frontplatten 30. Da aber der vordere oder erste Bereich des Mähergehäuses 20 über die Hakenlaschen 46 und die Stange 44 mit den rückwärtigen Enden der unteren Lenker 36 in Verbindung steht, wird der vordere Bereich des Mähergehäuses mit den rückwärtigen Enden der unteren Lenker 36 zusammen angehoben oder abgesenkt. Die oberen und unteren zueinander parallel verlaufenden Lenker 34 und 36 wirken als ein Gelenkviereck, so daß das Mähergehäuse parallel verstellt wird, wenn die Höhe des vorderen Bereiches des Mähergehäuses 20 eingestellt wird. Über das Gelenkviereck werden auch bei der Verstellung die Pendelräder in ihrer aufrechten Stellung gehalten.

Bei der Höhenverstellung des Mähergehäuses wird dessen rückwärtiger Bereich 60 parallel verstellt, und zwar einmal durch eine Verschiebung des rückwärtigen Teils 70 der Verbindungsteile 64 nach oben oder unten und zum anderen durch eine Drehung des Winkelhebels 78. Die Parallelverstellung erlaubt einen besseren Grasschnitt. Sie wird ausgelöst durch eine Drehung an der Handkurbel 58, wodurch der Ausleger 52 um die Längsachse der Stange 44 nach vorne oder rückwärts verstellt wird. Gleichzeitig wird sich das erste Gestänge 80 bei dieser Bewegung nach vorne oder rückwärts mitverstellen und den Winkelhebel 78 um seine horizontale Anschlußachse mit den Verbindungsteilen 64 drehen. Der über den Verbindungsteil 82 an den rückwärtigen Bereich des Mähergehäuses 20 angeschlossene Winkelhebel 78 wird dann diesen Bereich entsprechend anheben oder absenken.

Der Aufwärts- oder Abwärtshub des rückwärtigen Bereiches des Mähergehäuses 20 ist nur teilweise auf die Schwenkbewegung des Winkelhebels 78 zurückzuführen. Denn, wenn der vordere Bereich des Mähergehäuses angehoben oder abgesenkt wird, beschreiben die vorderen Teile 68 der Verbindungsteile 64 eine nach oben oder unten gerichtete Kreisbewegung zusammen mit der Stange 44. Die Längsschlitze 74 in den Verbindungsteilen 64 erlauben dabei diesen sich mit Bezug auf die Stange 76 längs zu verstellen und auch zu schwenken, wodurch auch der Winkelhebel 78 entsprechend in seiner Höhe mitverstellt wird. Damit ist ein Teil der Höhenverstellung auf die Vertikalverstellung des Winkelhebels 78 zurückzuführen. Der restliche Teil der Höhenverstellung beruht auf dem Schwenken des Winkelhebels 78. Die Schenkel des Winkelhebels 78 können damit in ihrer Länge relativ kurz gehalten werden, so daß eine niedrige und kompakte Bauweise möglich ist und das Mähergehäuse unter Zäunen, Büschen oder anderen Hindernissen leicht arbeiten kann. Natürlich vermindert ein kleiner Winkelhebel auch die Gesamtkosten des Mähers.

Der Gelenkmechanismus 26 mit seiner in Fahrtrichtung verlaufenden Achse erlaubt dem Rahmen 22 mit dem an ihm angreifenden Mähergehäuse 20 um diese Achse gegenüber dem Grundgerät 12 zu verkippen, wenn beispielsweise das rechte oder linke Pendelrad auf ein Hindernis trifft und dieses überwindet. Hierdurch wird ebenfalls ein gleichmäßigeren Schnitt erreicht. Der Rahmen kann keine Schwenkung um eine horizontale Querachse ausführen, wie es bei Sitzrasenmähern immer der Fall ist. Andererseits ist es aber auch möglich, den Rahmen 22 mit dem Grundgerät 12 starr zu verbinden.

Die Höheneinstellvorrichtung gemäß der vorliegenden Erfindung erlaubt aber auch dem rückwärtigen Bereich des Mähergehäuses 20, Bodenerhebungen zu überwinden, so daß ein Einschneiden in die Grasnabe vermieden wird. Hierzu sind Bodenräder 88 am rückwärtigen Bereich des Mähergehäuses 20 vorgesehen, und zwar im Bereich der äußeren Ecken des Gehäuses. Diese laufen auf die Bodenerhebung auf und heben die entsprechende rückwärtige Seite an. Bei einer solchen Bewegung bleiben das Mähergehäuse 20, die Handkurbel 58, der Ausleger 52, die Stange 44, die Lenker 34 und 36, die Pendelräder und die Frontplatten 30 in ihren gegenseitigen Relativlagen und schwenken um die die Frontplatten 30 mit dem Rahmen 22 verbindenden Bolzen 28.

Wenn der rückwärtige Bereich nach oben zum Überwinden eines Hindernisses ausschwenkt, dann verstellen sich die vorderen Teile 68 der Verbindungsteile 64 zusammen mit der Stange 44 nach oben und rückwärts. Die die Stange 76 aufnehmenden Längsschlitze 74 erlauben eine Verschiebung und Verstellung der Verbindungsteile 64 auf der Stange 76, wenn der vordere Teil der Verbindungsglieder zusammen mit der Stange 44 nach oben verschwenkt. Durch die Längsschlitze 74 wird damit eine nach oben gerichtete Bewegung des rückwärtigen Bereiches des Mähergehäuses nicht blockiert. Beim Hochschwenken des rückwärtigen Bereiches 60 wandert auch der hochstehende Teil 84 zusammen mit dem Verbindungsteil 82 nach oben. Die Längsschlitze 74 erlauben dabei den Verbindungsteilen 64 zu schwenken und sich mit Bezug auf die Stange 76 zu verschieben. Ist der hochstende Teil 84 anstelle der Öffnung 86 mit einem sich vertikal erstreckenden Längsschlitz versehen, dann wird bei einem Höhenausweichen des rückwärtigen Bereiches der Verbindungsteil 82 in dem Längsschlitz frei beweglich sein.

## Patentansprüche

1. Mäher, insbesondere Frontmäher, mit einem sich auf mindestens einem antreibbaren Rad (16) abstützenden Grundgerät (12), einem an das Grundgerät (12) vertikal unverschwenkbar anschließbaren, sich auf mindestens einem Laufrad (32) abstützenden Rahmen und einem an den Rahmen über eine Höhenverstellvorrichtung anschließbaren Mähergehäuse (20), dadurch gekennzeichnet, daß ein einen ersten Teil (68) und einen zweiten Teil (70) aufweisendes Verbindungsglied mit seinem ersten Teil (68) mit einem ersten Bereich (42) des Mähergehäuses (20) vertikal schwenkbar verbunden, mit seinem zweiten Teil (70) an dem Rahmen höhenverschiebbar angelenkt ist und eine einen Winkelhebel (78) aufweisende Stellvorrichtung schwenkbar aufnimmt, die einenends an einem zweiten Bereich (60) des Mähergehäuses (20) und anderenends an der Höhenverstellvorrichtung angreift, über die der erste Bereich (42) des Mähergehäuses (20) vertikal verstellbar ist.

2. Mäher nach Anspruch 1, dadurch gekennzeichnet, daß der Winkelhebel (78) der Stellvorrichtung mit dem Verbindungsglied vertikal schwenkbar verbunden und zusammen mit dem Verbindungsglied höhenverschiebbar ist, wobei der eine Schenkel des Winkelhebels (78) über ein erstes Gestänge (80) an der Höhenverstellvorrichtung und der andere Schenkel über ein zweites Gestänge an den zweiten Bereich des Mähergehäuses (20) angreift.

3. Mäher nach Anspruch 1, dadurch gekennzeichnet, daß in dem zweiten Teil (70) des Verbindungsgliedes ein Längsschlitz (74) vorgesehen ist, durch den eine mit dem Rahmen verbundene Stange (76) geführt ist.

4. Mäher nach einem oder mehreren der vorherigen Ansprüche, dadurch gekennzeichnet, daß die Höhenverstellvorrichtung eine auf dem Mähergehäuse (20) drehbar angeordnete Stange (44) aufweist, die endseitig mit ersten schwenkbar an dem Rahmen angreifenden Lenkern (36) fest verbunden ist, den ersten Teil (68) des Verbindungsgliedes drehbar aufnimmt und mit einem Ausleger (52) versehen ist, an dem eine manuell betätigbare Verstelleinrichtung und das erste Gestänge (80) angreift.

5. Mäher nach Anspruch 4, dadurch gekennzeichnet, daß die Verstelleinrichtung eine über eine Handkurbel (58) verstellbare sich auf dem Mähergehäuse (20) abstützende Gewindestange (54) aufweist.

6. Mäher nach Anspruch 4, dadurch gekennzeichnet, daß parallel zu den ersten Lenkern (36) und oberhalb dieser zweite Lenker (34) vorgesehen sind, die schwenkbar mit dem Rahmen und mit dem Mähergehäuse (20) verbunden sind.

7. Mäher nach einem oder mehreren der vorherigen Ansprüche, dadurch gekennzeichnet, daß die den Rahmen abstützenden Laufräder (32) als mit dem Rahmen schwenkbar verbundene Pendelräder ausgebildet sind, an denen die ersten und zweiten Lenker (36, 34) angelenkt sind.

8. Mäher nach Anspruch 2, dadurch gekennzeichnet, daß das zweite Gestänge eine Totgangverbindung aufweist und daß der zweite Bereich des Mähergehäuses mit mindestens einem Bodenrad (88) versehen ist.

## Claims

1. Mower, in particular a front mower, with a main appliance (12) supported on at least one drivable wheel (16), a frame which can be connected vertically non-pivotably to the main appliance (12) and is supported on at least one running wheel (32), and a mower housing (20) which can be connected to the frame by a height adjusting device, characterised in that a connecting member comprising first and second portions (68, 70) is vertically pivotably connected by its first portion (68) to a first region (42) of the mower housing (20), is coupled vertically slidably by its second portion (70) to the frame, and pivotably receives a regulating device comprising an angle lever (78), which engages at one end a second region (60) of the mower housing (20) and at the other end the height adjusting device by which the first region (42) of the mower housing (20) is vertically displaceable.

2. Mower according to claim 1, characterised in that the angle lever (78) of the regulating device is vertically pivotably connected to the connecting member and vertically slidable together with the connecting member, wherein one arm of the angle lever (78) engages the height adjusting device by a first linkage (80) and the other arm engages the second region of the mower housing (20) by a second linkage.

3. Mower according to claim 1, characterised in that in the second portion (70) of the connecting member there is provided a longitudinal slot (74) through which is guided a rod (76) connected to the frame.

4. Mower according to one or more of the preceding claims, characterised in that the height adjusting device comprises a rod (44) which is mounted rotatably on the mower housing (20) and which at the ends is rigidly connected to first links (36) pivotably engaging the frame, rotatably receives the first portion (68) of the connecting member and is provided with an extension arm (52) which is engaged by a manually operated adjusting device and the first linkage (80).

5. Mower according to claim 4, characterised in that the adjusting device comprises a threaded rod (54) which is displaceable by a hand crank (58) and supported on the mower housing (20).

6. Mower according to claim 4, characterised in that parallel to the first links (36) and above these are provided second links (34) which are pivotably connected to the frame and to the mower housing (20).

7. Mower according to one or more of the preceding claims, characterised in that the running wheels (32) which support the frame are constructed as swivel wheels which are pivotably connected to the frame and to which the first and second links (36, 34) are coupled.

8. Mower according to claim 2, characterised in that the second linkage comprises a connection with lost motion and the second region of the mower housing is provided with at least one ground wheel (88).

## Revendications

1. Tondeuse, en particulier tondeuse frontale, comprenant un appareil de base (12) s'appuyant sur au moins une roue motrice (16), un châssis s'appuyant sur au moins une roue (32) et pouvant être raccordé sans possibilité de pivotement vertical à l'appareil de base (12), et un carter de tondeuse (20) pouvant être raccordé au châssis par l'intermédiaire d'un dispositif de réglage en hauteur, **caractérisée** en ce qu'un organe de liaison, présentant une première partie (68) et une seconde partie (70), est relié à pivotement vertical à une première région (42) du carter de tondeuse (20) par sa première partie (68), est articulé à déplacement en hauteur au châssis par sa seconde partie (70), et reçoit à pivotement un mécanisme de commande présentant un levier coudé (78), qui agit par une extrémité sur une seconde région (60) du carter de tondeuse (20) et par l'autre extrémité sur le dispositif de réglage en hauteur, qui permet de régler en hauteur la première région (42) du carter de tondeuse (20).

2. Tondeuse selon la revendication 1, **caractérisée** en ce que le levier coudé (78) du mécanisme de commande est relié à pivotement vertical à l'organe de liaison et peut être déplacé en hauteur conjointement avec l'organe de liaison, une branche du levier coudé (78) agissant par I'intermédiaire d'une première tringlerie (80) sur le dispositif de réglage en hauteur, et l'autre branche agissant par l'intermédiaire d'une seconde tringlerie sur la seconde région du carter de tondeuse (20).

3. Tondeuse selon la revendication 1, **caractérisée** en ce qu'une fente longitudinale (74) est prévue dans la seconde partie (70) de l'organe de liaison, fente qui est traversée par une tige (76) assemblée au châssis.

4. Tondeuse selon l'une quelconque des revendications précédentes, **caractérisée** en ce que le dispositif de réglage en hauteur présente une tige (44) disposée à rotation sur le carter de tondeuse (20), qui est reliée fixement à ses extrémités à des premiers bras oscillants (36) agissant à pivotement sur le châssis, reçoit à rotation la première partie (68) de l'organe de liaison. et est pourvue d'une console (52) sur laquelle agissent un dispositif de réglage à actionnement manuel et la première tringlerie (80).

5. Tondeuse selon la revendication 4, **caractérisée** en ce que le dispositif de réglage présente une tige filetée (54), qui peut être actionnée par une manivelle (58) et s'appuie sur le carter de tondeuse (20).

6. Tondeuse selon la revendication 4, **caractérisée** en ce que des seconds bras oscillants (34), qui sont reliés à pivotement au châssis et au carter de tondeuse (20), sont prévus parallèlement aux premiers bras oscillants (36) et au-dessus de ces derniers.

7. Tondeuse selon l'une quelconque des revendications précédentes, **caractérisée** en ce que les roues (32) soutenant le châssis sont réalisées sous la forme de roues oscillantes reliées à pivotement au châssis, auxquelles sont articulés les premiers et seconds bras oscillants (36, 34).

8. Tondeuse selon la revendication 2, **caractérisée** en ce que la seconde tringlerie présente une liaison à course morte, et en ce que la seconde région du carter de tondeuse est pourvue d'au moins une roue d'appui (88).
